# EUROPÄISCHE PATENTSCHRIFT

(11) **EP 1 179 456 B1**
(45) Veröffentlichungstag und Bekanntmachung des Hinweises auf die Patenterteilung: **10.08.2005**
(21) Anmeldenummer: 01250264.7
(22) Anmeldetag: 17.07.2001
(51) Int. Cl.: B60R 21/16

(54) **Gassack und Verfahren zur Herstellung eines Gassacks**
Airbag and method of manufacturing the same
Coussin de sécurité et sa méthode de fabrication

(30) Priorität: 07.08.2000 DE 10039555
(43) Veröffentlichungstag der Anmeldung: 13.02.2002
(73) Patentinhaber: Takata-Petri AG, 63743 Aschaffenburg (DE)
(72) Erfinder: Eckert, Nick, 12587 Berlin (DE); Rietz, Carsten, 12351 Berlin (DE); Müller, Ingo, 15537 Wernsdorf (DE)
(74) Vertreter: Müller, Wolfram Hubertus, Dipl.-Phys.

(56) Entgegenhaltungen:
- EP-A- 0 865 971
- EP-A- 0 901 942
- EP-A- 0 955 215
- WO-A-97/23367
- US-A- 5 306 043

## Beschreibung

Die Erfindung betrifft einen Gassack, der sich insbesondere zum Schutz des Kniebereichs eines Fahrzeuginsassen eignet und ein Verfahren zur Herstellung eines solchen Gassacks.

Airbags für den Kniebereich (Kniebags) müssen im Kollisionsfall den relativ hohen Energieanteil der unteren Körperhälfte eines Fahrzeuginsassen auf einer relativ kleinen Fläche und einem relativ geringen Vorverlagerungsweg abbauen. Um die Knie bzw. Unterschenkel des Fahrzeuginsassen sicher zurückzuhalten, ist erforderlich, daß der Kniebag sich schnell entfaltet und hohe Rückhaltekräfte aufbauen kann.

Aus der DE 297 10 745 U1 ist eine Knie-Rückhalteeinrichtung bekannt, bei der im Kollisionsfall eine Kniefängerplatte durch einen Gassack in Richtung der Knie eines Fahrzeuginsassen bewegt wird. Fangbänder dienen dabei zur Festlegung der Endposition der Kniefängerplatte und zur Steuerung der Bewegungsbahn der Kniefängerplatte während des Entfaltungsvorgangs. Die Verwendung einer Kniefängerplatte weist den Vorteil auf, daß bei Kontakt mit den Knien des Fahrzeuginsassen auf den Gassack einwirkende Kräfte über die Kniefängerplatte auf eine große Fläche verteilt werden, so daß hohe Rückhaltekräfte mit einem relativ niedrigen Gassackinnendruck realisiert werden können. Die Verwendung einer Kniefängerplatte ist jedoch aufwendig und kostenintensiv.

Die DE 298 07 424 U1 offenbart eine Knieschutzeinrichtung mit einem kissenförmig zugeschnittenen Gassack. Zum Aufbringen einer hohen Rückhaltekraft sind im Gassack Fangbänder vorgesehen, die gegenüberliegende Abschnitte der Gassackwandung verbinden und so einer Gestaltänderung des Gassacks beim Eintauchen der Knie entgegenwirken. Zusätzlich sind Trennwände zur Bildung von mehreren Kammern im Inneren des Gassacks vorgesehen. Die Verwendung von Fangbändern und Ausbildung von Trennwänden im Inneren des Gassacks stellt ebenfalls eine aufwendige und kostenintensive Lösung dar. Auch liegt bei einem kissenförmigen Gassackzuschnitt eine ungünstige Spannungsverteilung bei hohem Gassackinnendruck vor, da im Nahtbereich Spannungsspitzen bestehen. Zusätzlich weist ein kissenförmiger Gassackzuschnitt den Nachteil auf, daß im Randbereich des Kissens aufgrund der dort abnehmenden Tiefe des Gassacks eine verschlechterte Rückhaltewirkung vorliegt.

Aus der DE 295 17 953 U1 ist eine Knieschutzeinrichtung mit einem Gassack bekannt, der im entfalteten Zustand im wesentlichen zylindrisch ausgebildet ist. Der Gassack ist an seinen seitlichen Enden zusammengeschnürt im Fahrzeug befestigt. Es ist deswegen nicht möglich, den Gassack ohne seitliche Befestigung in einem Fahrzeug anzubringen. Aus der EP 0 901 942 A and WO 97 23367 A ist einer Gassack gemäß den Oberbegriffen der Ansprüchen 1 und 13 bekannt.

Der Erfindung liegt die Aufgabe zugrunde, einen Gassack, insbesondere für den Kniebereich eines Fahrzeuginsassen zur Verfügung zu stellen, der sich durch einen einfachen und kostengünstigen Aufbau, eine günstige Spannungsverteilung bei hohem Innendruck des entfalteten Gassacks auszeichnet und an seinen seitlichen Enden keiner Befestigung im Fahrzeug bedarf. Zusätzlich soll ein Verfahren zur Herstellung eines solchen Gassacks zur Verfügung gestellt werden.

Diese Aufgabe wird erfindungsgemäß durch einen Gassack mit den Merkmalen des Anspruchs 1 und ein Verfahren zur Herstellung eines Gassacks mit den Merkmalen des Anspruchs 13 gelöst. Bevorzugte und vorteilhafte Ausgestaltungen der Erfindung sind in den Unteransprüchen angegeben.

Danach wird der Seitenbereich des Gassacks durch Vernähen der seitlichen Enden von Gassackgewebelagen erzeugt, die durch Falten eines im wesentlichen zylindrischen Gewebeschlauches entstanden sind. Dies ermöglicht die Bereitstellung von Seitenbereichen für einen in seinem Hauptbereich im wesentlichen zylindrisch ausgebildeten Gassacks, ohne daß die Seitenbereiche am Fahrzeug befestigt werden müssen. Vielmehr werden durch Maßnahmen direkt am Gassack Seitenbereiche für einen zylindrischen Gassack bereitgestellt. Hierdurch ist der Gassack wesentlich vielseitiger und flexibler einsetzbar.

Durch den im wesentlichen zylindrischen Zuschnitt des Gassacks wird dabei ein einfach aufgebauter Gassack mit einer symmetrischen Form zur Verfügung gestellt, der eine im wesentlichen gleichmäßige Spannungsverteilung aufweist. Dabei können durch die symmetrische Spannungsverteilung im Gassack hohe Innendrücke zur Verfügung gestellt werden, so daß auch bei einem lediglich in einem kleinen Bereich des Gassacks erfolgenden Kontakt mit den Knien des Insassen hohe Rückhaltekräfte erzielbar sind. So können aufgrund des hohen Innendruckes auf einer relativ kurzen Strecke die Trägheitskräfte des sich nach vorne verlagernden Fahrzeuginsassen abgebaut werden. Des weiteren wird aufgrund des durchgehend gleichen Querschnitts des Gassacks in seinem zylindrischen Hauptbereich anders als bei kissenförmigen Gassäcken im gesamten Gassackbereich eine gute Rückhaltewirkung bereitgestellt.

In einer bevorzugten Ausführungsform ist der Gewebeschlauch unter Ausbildung einzelner Segmente insbesondere kreuz- oder sternförmig gefaltet und werden die dabei entstehenden Segmente aufeinandergelegt und durch eine Quernaht an ihren seitlichen Enden vernäht.

Dabei ist in einer Ausführungsform vorgesehen, daß die Segmente in ihrem mittleren Bereich einander zumindest teilweise überlappen, wobei die Gewebebahnen der überlappenden Segmente in diesem Bereich übereinander angeordnet sind. Hierdurch wird vermieden, daß im mittleren Bereich des gefalteten Gassacks eine Art Hohlraum zwischen der obersten und der untersten Gewebelage entsteht, was zu Spannungen beim Entfalten des Gassacks führen kann.

Ebenfalls liegt es jedoch im Rahmen der Erfindung, daß die einzelnen Segmente in ihrem mittleren Bereich einen Abstand zueinander aufweisen.

In dem Gassack der Erfindung sind zusätzliche Gewebeabschnitte vorgesehen, die insbesondere im seitlichen Nahtbereich des Gassackes in oder zwischen die einzelnen Segmente des gefalteten Gassackes eingebracht sind. Dabei handelt es sich beispielsweise um doppelt gelegte Stoffstreifen, die bevorzugt vor Anbringen der Quernaht von der Seite in oder zwischen die Segmente eingeschoben werden. Die zusätzlichen Gewebeabschnitte sorgen für einen Dickenausgleich bzw. eine im wesentlichen konstante Dicke des gefalteten Gassacks insbesondere im Bereich der Quernaht. Sie verbessern dadurch die Festigkeit der Quernaht.

Dabei sind die zusätzlichen Gewebeabschnitte in einer Ausführungsform der Erfindung ein integraler Teil des Gassacks. Beispielsweise handelt es sich um am Rand des Gassackzuschnitts angebrachte Gewebelappen, die vor Anbringen einer Quernaht eingeklappt werden.

In einer bevorzugten Ausgestaltung des erfindungsgemäßen Gassackes weist der jeweilige Seitenbereich des Gassacks eine geringe Längsausdehnung auf. Unter Längsausdehnung wird dabei die Ausdehnung des Seitenbereiches in Richtung der Längsachse des zylindrischen Hauptbereichs verstanden. Durch die geringe Längsausdehnung des Seitenbereiches wird ein Gassack bereitgestellt, der sich bis kurz vor seine seitlichen Enden zylindrisch erstreckt. Mit anderen Worten ist der Übergang zwischen dem zylindrischen Bereich und dem seitlichen Verschluß des Gassackes kurz. Hierdurch wird gewährleistet, daß der Gassack bis möglichst weit an seinen seitlichen Rand einen konstanten Querschnitt aufweist, so daß auch ein in diesem Randbereich mit dem Gassack in Kontakt tretendes Körperteil (Knie) zuverlässig zurückgehalten wird.

Der zylindrische Hauptbereich des Gassacks besteht bevorzugt aus einer einteiligen, im wesentlichen rechteckigen Gewebebahn, deren Längsseiten durch eine Längsnaht miteinander verbunden sind. Ein derart ausgebildeter Gassack zeichnet sich durch einen einteiligen, rechteckigen Zuschnitt aus und ist entsprechend einfach herstellbar. Fangbänder, Lastverteiler oder andere Zusatzmittel sind nicht erforderlich. Der Bereich zwischen den Seitenbereichen stellt den zylindrisch ausgebildeten Hauptbereich des Gassacks dar. In den Seitenbereichen ist der Gassack in einfacher Weise durch eine Quernaht abgeschlossen.

Es liegt ebenfalls im Rahmen der Erfindung, den Hauptbereich durch einen entsprechend zugeschnittenen einteiligen Gewebeschlauch auszubilden.

Dem Gassack ist in an sich bekannter Art und Weise ein Gasgenerator zum Aufblasen des Gassackes im Kollisionsfall zugeordnet. Der Gassack bildet zusammen mit dem Gasgenerator und einer Einhausung ein Airbagmodul, das beispielsweise im unteren Bereich der Armaturentafel befestigt ist.

Das erfindungsgemäße Verfahren zur Herstellung eines erfindungsgemäßen Gassacks zeichnet sich durch die Merkmale des Anspruchs 13 aus.

Hierdurch wird auf der Basis eines zylindrischen Gewebeschlauches eine zylindrische Form eines Gassacks in einem Hauptbereich verwirklicht, wobei der Seitenbereich des Gassacks jeweils durch eine Quernaht gebildet wird.

In einer bevorzugten Weiterbildung des genannten Herstellungsverfahrens wird der Gewebeschlauch zunächst kreuz- oder sternförmig gefaltet. Dabei entstehen schlaufenartige Segmente. Bei einer kreuzförmigen Faltung entstehen vier derartige Segmente, bei einer sternförmigen Faltung beispielsweise sechs oder acht Segmente. Die schlaufenartigen Segmente, die in Längsrichtung verlaufende Gassackgewebelagen ausbilden, werden durch Verkippen aufeinandergelegt, so daß eine flächige, wiederum rechteckige Gesamtkontur entsteht. Anschließend werden die seitlichen Enden der schlaufenartigen Segmente durch eine Quernaht miteinander vernäht.

Diese Art der Faltung des Gassacks weist den Vorteil auf, daß sich im aufgeblasenen Zustand die Längsausdehnung der Seitenbereiche des Gassacks weiter reduziert hat.

In einer Ausführungsform werden die schlaufenartigen Segmente derart gefaltet, daß sie sich in ihrem mittleren Bereich zumindest teilweise überlappen, wobei die Gewebelagen der sich überlappenden Segmente in diesem Bereich aufeinander liegen. In einer anderen Ausführungsform sind die schlaufenartigen Segmente in ihrem mittleren Bereich zueinander beabstandet.

In beiden Fällen werden bevorzugt in oder zwischen die Gewebelagen der einzelnen Segmente zusätzliche Stofflagen eingebracht, die insbesondere im Bereich der Quernaht eine einheitliche Dicke des gefalteten Gassacks bereitstellen. Die zusätzlichen Stoffsegmente werden dabei in Bereiche des gefalteten Gewebeschlauches eingebracht, in denen eine verringerte Anzahl von übereinander angeordneten Gewebelagen der einzelnen Segmente vorhanden ist.

Zum Zurverfügungstellen des zylindrischen Gewebeschlauches wird bevorzugt eine einteilige, rechteckig zugeschnittene Gewebebahn auf die halbe Breite gefaltet, wobei die Längskanten der Gewebebahn aufeinander zu liegen kommen. Anschließend werden die aufeinanderliegenden Längskanten zu einer Längsnaht vernäht. Hierdurch wird auf der Basis einer einteiligen Gewebebahn rechteckigen Zuschnitts ein zylindrischer Gewebeschlauch bereitgestellt. Alternativ wird der Gewebeschlauch bereits bei der Herstellung einteilig als gewebter Schlauch hergestellt, ohne daß eine Naht vorliegt.

Die Erfindung wird nachfolgend unter Bezugnahme auf die Figuren der Zeichnung anhand mehrerer Ausführungsbeispiele näher erläutert. Es zeigen:
- Fig. 1 -: die Herstellung und Ausbildung einer ersten Ausführungsform eines Gassacks;
- Fig. 2 -: die Herstellung und Ausbildung einer zweiten Ausführungsform eines Gassacks;
- Fig. 3 -: die Herstellung und Ausbildung einer dritten Ausführungsform eines Gassacks;
- Fig. 4 -: eine vierte Ausführungsform eines Gassacks;
- Fig. 5a -: schematisch die zylindrische Form eines Gassacks im seitlichen Schnitt;
- Fig. 5b -: schematisch die zylindrische Form eines Gassacks in Draufsicht;
- Fig. 6 -: eine fünfte Ausführungsform eines Gassacks;
- Fig. 7 -: in Draufsicht einen Randabschnitt des Gassacks der Fig. 6;
- Fig. 8 -: einen Gassack entsprechend Fig. 2 mit einem Dickenausgleich im mittleren Bereich und
- Fig. 9 -: die Integration von zusätzlichen Gewebelagen in einen Gassack gemäß Fig. 8.

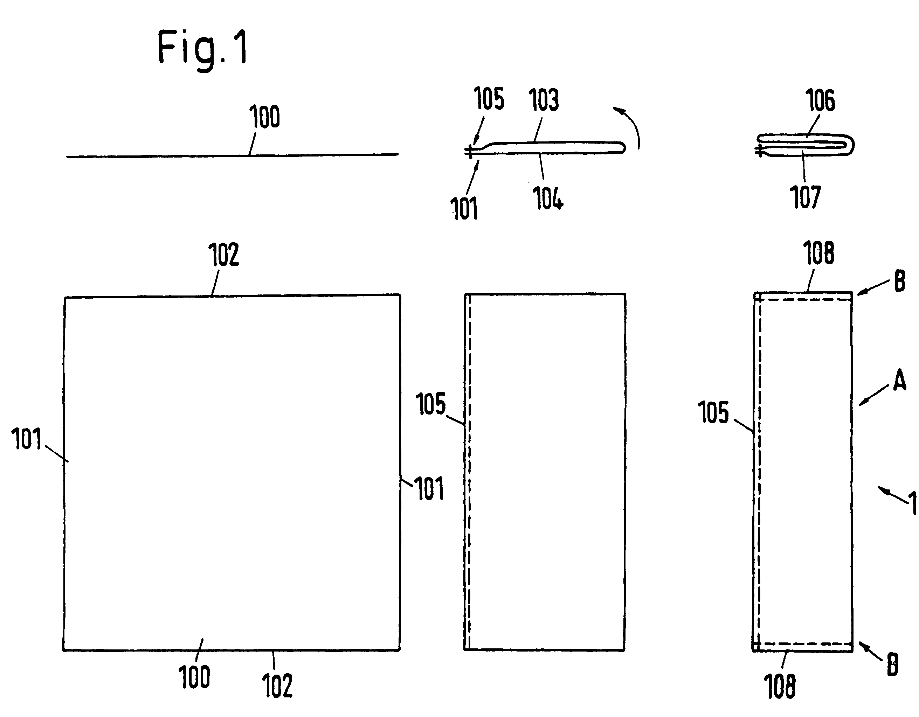

Die Fig. 1 zeigt die Abfolge zur Herstellung eines ersten Ausführungsbeispiels eines Gassacks 1. Der Gassack ist dabei jeweils im Schnitt und in Draufsicht dargestellt. Ausgangspunkt ist eine einteilige, rechteckige Gewebebahn 100 mit Längsseiten 101 und Querseiten 102. Die Gewebebahn 100 wird zunächst auf ihre halbe Breite zusammengefaltet, wobei zwei Gewebelagen 103, 104 aufeinander zu liegen kommen, die jeweils Längsabschnitte der Gewebebahn darstellen. Die Gewebebahnen 103, 104 werden an ihren freien Enden, d.h. den Seitenkanten 101 zu einer Längsnaht 105 miteinander verbunden.

Anschließend wird die so gefaltete Gewebebahn erneut auf die halbe Breite zusammengelegt, wobei zwei Segmente 106, 107 übereinander zu liegen kommen. Diese beiden Segmente, die aus insgesamt vier Lagen Gewebematerial bestehen, werden an ihren seitlichen Enden, d.h. an den Querseiten 102, durch einfache Quernähte 108 miteinander verbunden.

Bei Entfalten des auf diese Weise hergestellten Gassackes 1 bildet sich in einem mittleren Hauptbereich A eine zylindrische Form des Gassacks 1 aus, in dem der Gassack 1 einen im wesentlichen konstanten Querschnitt aufweist. Der Umfang des zylindrischen Gassacks 1 ist in diesem Bereich gleich der Länge der Querseiten 102 der Gewebebahn 100. Der zylindrische Hauptbereich A wird durch die seitlichen Bereiche B abgeschlossen, in denen die Quernähte 108 ausgebildet sind.

Es wird darauf hingewiesen, daß in der einfachsten Ausführungsform bereits unmittelbar nach Anbringen der Längsnaht 105 die Quernähte angebracht werden, ohne daß die Gewebebahn ein weiteres Mal auf ihre halbe Breite zusammengelegt wird.

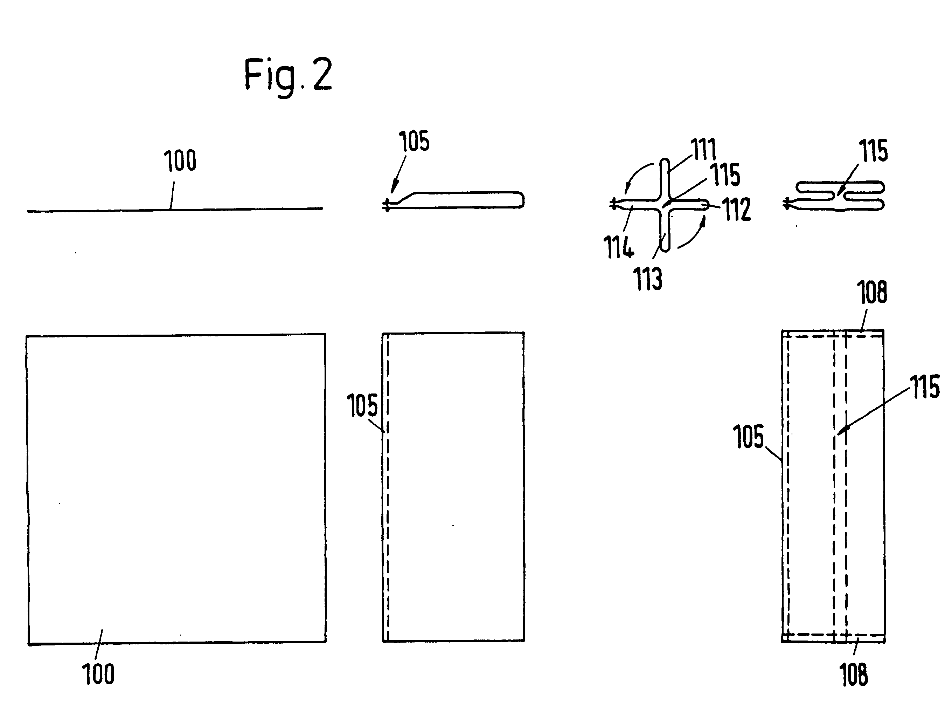

Bei dem Ausführungsbeispiel der Fig. 2 erfolgt die Herstellung des Gassackes zunächst wie in bezug auf Fig. 1 beschrieben. Nach Anbringen der Längsnaht 105 wird die Gewebebahn dann sternförmig gefaltet, wobei vier längs verlaufende im wesentlichen gleich lange schlaufenartige Segmente 111, 112, 113, 114 entstehen, die über einen mittleren Bereich 115 miteinander in Verbindung stehen. In dem mittleren Bereich 115 sind die einzelnen Segmente 111, 112, 113, 114 einander beabstandet und liegen nur die oberste und die unterste Lage aneinander an.

Anschließend wird das obere Segment 111 auf das linke Segment 114 und das untere Segment 113 auf das rechte Segment 112 gelegt, so daß jeweils vier Gewebelagen übereinander angeordnet sind. Anschließend werden wiederum Quernähte 108 an den seitlichen Enden angebracht.

Im aufgeblasenen Zustand bilden sich wiederum ein Hauptbereich, mit der gewünchten zylindrischen Form, und Seitenbereiche entsprechend der Fig. 1 aus. Gegenüber der Ausführungsvariante der Fig. 1 weist die Ausführungsvariante der Fig. 2 den Vorteil auf, daß sich im entfalteten Zustand die Längsausdehnung der Seitenbereiche des Gassackes weiter reduziert hat.

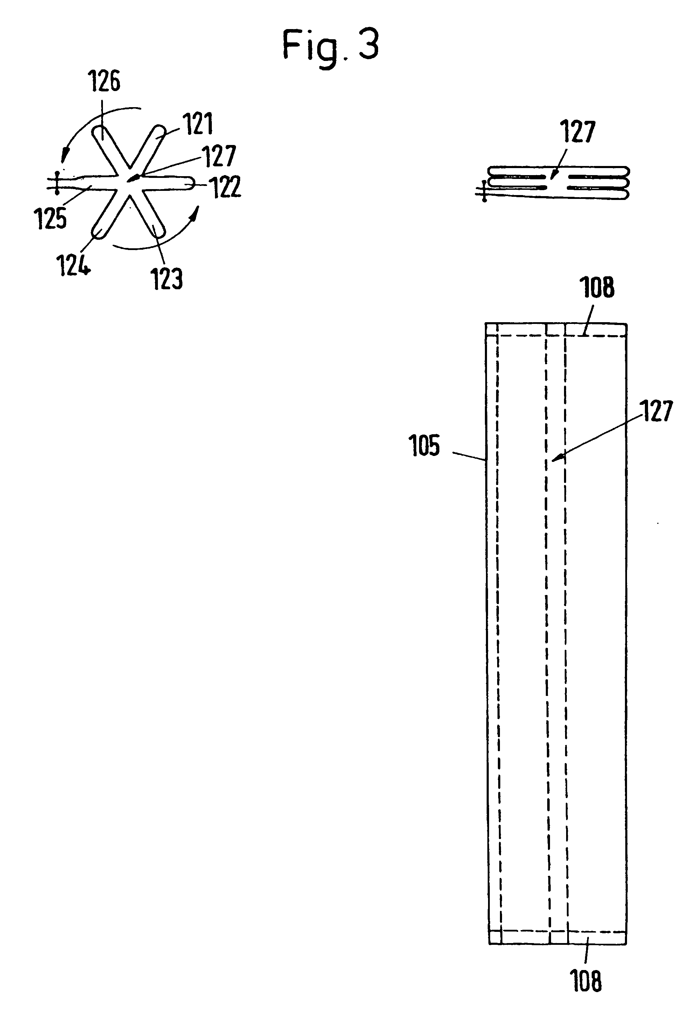

Das Ausführungsbeispiel der Fig. 3 unterscheidet sich von dem Ausführungsbeispiel der Fig. 2 insofern, als eine sternförmige Faltung mit 6 Segmenten 121, 122, 123, 124, 125, 126 vorgenommen wird. Die beiden oberen Segmente 121, 126 werden dann auf das linke Segment 125 und die beiden unteren Segmente 123, 124 auf das rechte Segment 122 gelegt. Es kommen dann insgesamt 6 Gewebelagen übereinander in Anlage. Dabei ist wiederum ein mittlerer Bereich 127 vorgesehen, über den die einzelnen Segmente miteinander in Verbindung stehen. Nach dem erläuterten Falten und Aufeinanderlegen der Segmente werden wiederum Quernähte 108 seitlich angebracht.

Es wird darauf hingewiesen, daß naturgemäß auch Gassäcke entsprechend den Fig. 2 und 3 mit einer anderen Anzahl von Segmenten hergestellt werden können, etwa 8 oder 10 Segmenten.

Die in den Fig. 1-3 beschriebenen und dargestellten Faltungen, sowie das Anbringen der Quernaht 108, lassen sich auch an einem einteilig gewebten Gewebeschlauch durchführen.

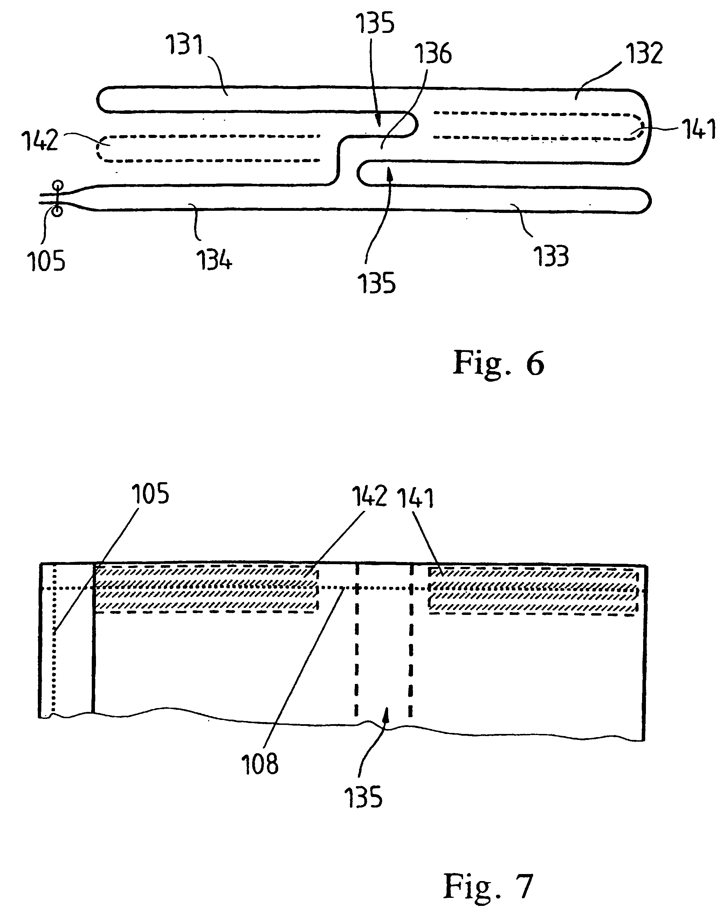

Ein weiteres Ausführungsbeispiel der Erfindung ist in der Figur 6 dargestellt. Die Herstellung des Gassackes erfolgt dabei zunächst wie in Bezug auf die Figur 2 beschrieben. Ein Unterschied liegt insofern vor, als nach Anbringen der Längsnaht 105 der Gewebeschlauch derart gefaltet wird, daß die dabei entstehenden schlaufenartigen Segmente 131, 132, 133, 134 in ihrem mittleren Bereich 135 einander überlappen. Dabei ist im mittleren Bereich 135 ein Verbindungsbereich 136 ausgebildet, der die unteren Schlaufen 133, 134 mit den oberen Schlaufen 131, 132 verbindet.

Diese Anordnung führt im dargestellen Ausführungsbeispiel dazu, dass im mittleren Bereich 135 insgesamt 6 Gewebelagen übereinander liegen. Dies weist den Vorteil auf, daß anders als in den Figuren 2 und 3 im mittleren Bereich kein Zwischenraum vorliegt, in dem nur die unterste und die oberste Gewebelage einander gegenüberstehen. In einem solchen Fall, d.h. wenn nur die unterste und die oberste Gewebelage einander gegenüberstehen, entsteht eine nicht gleichmäßige Höhe des gefalteten Gassackes, da im angrenzenden Bereich ein höhere Zahl von Gewebelagen (vier Gewebelagen in der Figur 2 und sechs Gewebelagen in der Figur 3) übereinander liegen. Dies führt zu Problemen bei der Abdichtung und zu unerwünschten Spannungen beim Entfalten des Gassackes.

Diese Nachteile vermeidet die Ausführungsform der Figur 6, bei der der mittlere Bereich 135 aufgrund der sich überlappenden Segmente mit übereinanderliegenden Gewebelagen versehen ist.

Es ist nun allerdings insbesondere im Nahtbereich 108 sicherzustellen, dass der gefaltete Gassack eine im wesentlichen konstante Dicke aufweist. Dies wäre bei dem Ausführungsbeispiel der Figur 6 zunächst deswegen nicht gegeben, da im dem mittleren Bereich 135 sechs Gewebelagen übereinander angeordnet sind, während im angrenzenden Bereich lediglich vier Gewebelagen übereinander angeordnet sind.

Für einen Dickenausgleich werden vor der Fertigung der Quernaht 108 zusätzliche Gewebeabschnitte bzw. Ausgleichslagen im Gassack angeordnet, die eine gleichmäßige Höhe des gefalteten Gassackes bereitstellen. Diese zusätzlichen Stofflagen sind insbesondere im seitlichen Nahtbereich angrenzend an den mittleren Bereich 135 in bzw. zwischen die einzelnen Gewebelagen der schlaufenartigen Segmente eingelegt und zusammen mit der Quernaht 108 vernäht. Es handelt sich bei ihnen beispielsweise um doppelt gelegte Stoffstreifen, die von der Seite her in und zwischen die Gewebelagen der Segmente 131, 134, 132 eingelegt werden.

In den Figuren 6 und 7 sind zwei solcher doppelt gelegter Stoffstreifen 141, 142 gestrichelt dargestellt. Sie realisieren einen Ausgleich zwischen der erhöhten Anzahl von Gewebelagen im mittleren Bereich 135 und der geringeren Anzahl von Gewebelagen im angrenzenden Bereich. Dabei ist in der Draufsicht der Figur 7 zu erkennen, daß die Gewebeabschnitte 141, 142 im Bereich der Quernaht 108 in den Gassack eingebracht sind. Die daraus resultierende gleichmäßige Dicke des Randbereichs erlaubt eine bessere seitliche Vernähung und Abdichtung des Gassacks. Es liegt eine verbesserte Nahtfestigkeit der Quernaht 108 vor, da im Nahtbereich ein verminderter Angriffsbereich für heiße Gase besteht.

Je nach Art der Faltung des Gassackes können auch mehr als zwei Stofflagen im Bereich der schlaufenartigen Segmente vorgesehen sein.

Es wird darauf hingewiesen, daß der Gewebeschlauch auch mit sechs Schlaufen (gemäß Figur 3) oder noch mehr Schlaufen derart gefaltet werden kann, daß die schlaufenartigen Segmente sich in ihrem mittleren Bereich zumindest teilweise überlappen und die Gewebelagen der sich überlappenden Segmente in diesem Bereich aufeinander liegen. Es ist dann ggf. eine entsprechend höhere Anzahl von zusätzlichen Gewebeabschnitten vorgesehen.

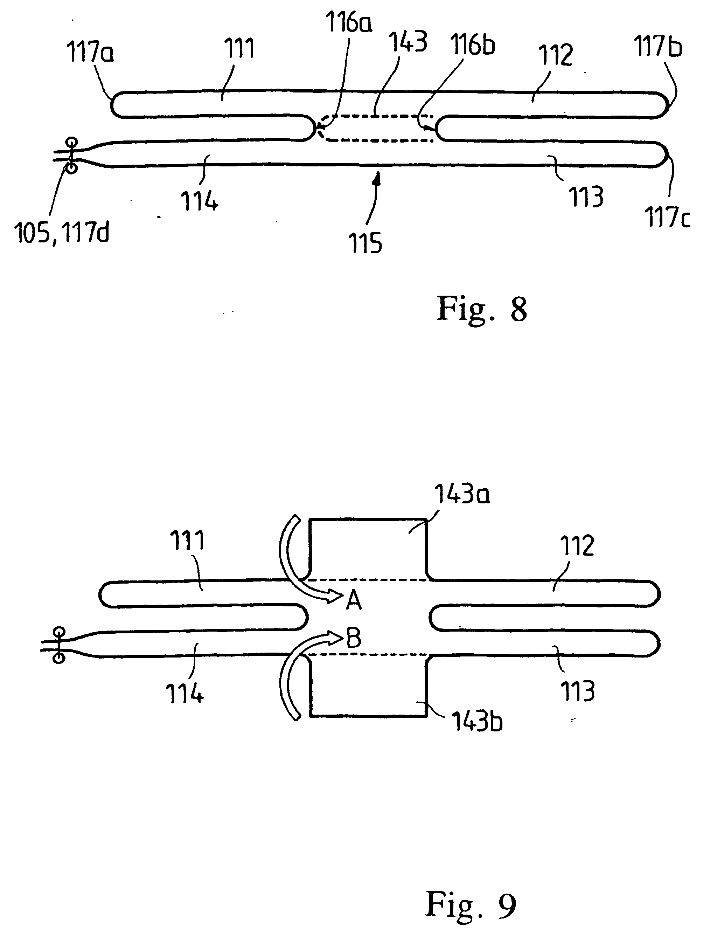

Die Fig. 8 zeigt eine Abwandlung des Ausführungsbeispiels der Fig. 2, bei der der mittlere Bereich 115, in dem die einzelnen Segmente 111, 112, 113, 114 voneinander beabstandet sind, breiter ausgeführt ist. Es wird darauf hingewiesen, daß der mittlere Bereich 115 sich auch durch den Abstand innerer Faltlinien 116a, 116b der Segmente 111, 112, 113, 114 definieren läßt. Die inneren Faltlinien 116a, 116b entstehen bei der sternförmigen Faltung des Gewebeschlauchs (vgl. Fig. 2). An ihnen gehen die Segmente 114, 111 sowie 112, 113 ineinander über. Die Segmente 111, 112, 113, 114 weisen an ihren äußeren Rändern jeweils auch eine äußere Faltlinie 117a, 117b, 117c, 117d auf, wobei die eine äußere Faltlinie 117d durch die Längsnaht 105 gebildet wird. Entsprechende innere und äußere Faltlinien sind naturgemäß auch bei den Ausführungsbeispielen der Figuren 2, 3 und 6 vorhanden.

In dem Bereich 115 ist im Bereich der Quernaht 108 ein zusätzlicher Gewebeabschnitt 143 vorgesehen. Der Gewebeabschnitt 143 besteht beispielsweise aus einem doppelt gelegten Stoffabschnitt und dient einem Dickenausgleich im Bereich der Quernaht 108, wie in Bezug auf die Figuren 6 und 7 erläutert wurde.

Figur 9 zeigt ein Ausführungsbeispiel entsprechend der Fig. 8, bei dem der zusätzliche Gewebeabschnitt 143 aus Gewebelappen 143a, 143b besteht, die Teil des Gassacks und in den Gassackzuschnitt integriert sind. Die Gewebelappen 143a, 143b sind dabei lediglich zur besseren Darstellung nach oben bzw. unten abstehend dargestellt. Vor der Anbringung der Quernaht 108 werden die Gewebelappen 143a, 143b nach innen eingeschlagen, wie durch die Pfeile A, B angedeutet.

Die Gewebelappen 143a, 143b sind beispielsweise an den Seiten 102 einer Gewebebahn 100 entsprechend den Figuren 1 und 2 ausgebildet.

Es wird darauf hingewiesen, daß die Ausbildung der zusätzlichen Gewebeabschnitte als integraler Teil des Gassackzuschnitts auch bei den Ausführungsbeispielen der Figuren 6 und 7 realisiert werden kann, wobei der Gassack entsprechend zu gestalten ist.

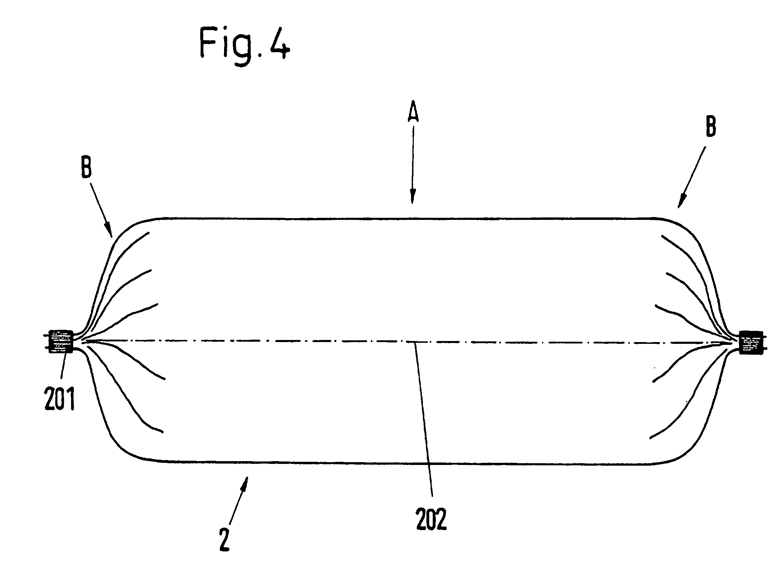

In Fig. 4 ist ein alternatives Ausführungsbeispiel eines Gassacks dargestellt, der in einem Hauptbereich A eine zylindrische Form aufweist. Die Seitenbereiche B sind bei dieser Ausführungsform dadurch gebildet, daß die Enden des zylindrischen Bereichs A in Richtung der Längsachse 202 des Gassacks 2 zusammengerafft und anschließend beispielsweise mittels eines Klemmteils 201 verschlossen werden. Der zylindrische Hauptbereich A kann dabei entsprechend Fig. 1 aus einem rechteckigen Gewebeteil hergestellt werden, dessen Längsseiten zu einer Längsnaht verbunden werden, oder auch aus einem vorgefertigten, einteilig gewebten Gewebeschlauch bestehen.

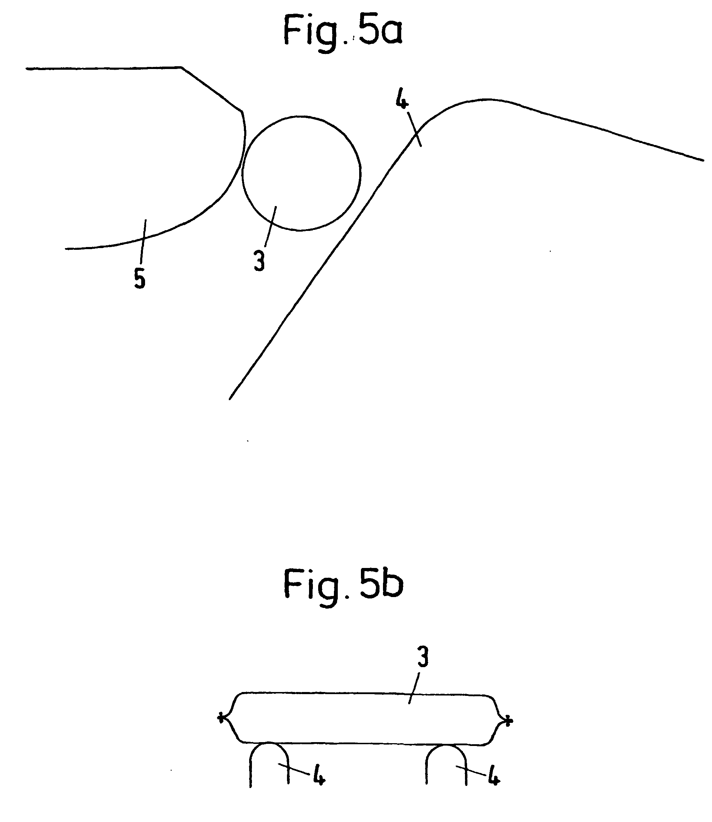

Fig. 5a und 5b zeigen schematisch einen zylindrischen Gassack 3, der in Kontakt mit dem Knie 4 eines Fahrzeuginsassen tritt. Der Gassack 3 tritt nach Aktivierung des Gasgenerators (nicht dargestellt) aus einer Einhausung, welche in an sich bekannter Weise beispielsweise im unteren Bereich der Armaturentafel 5 angeordnet ist (vgl. Fig. 5a).

Die zylindrische Form des Gassacks 3 stellt eine im wesentlichen homogene Spannungsverteilung im Gassack zur Verfügung, so daß hohe Gassackinnendrücke bereitgestellt werden können. Die zylindrische Form des Gassacks stellt darüber hinaus sicher, daß auch bei Kontakt eines Knies 4 eines Fahrzeuginsassen mit dem Gassack 3 in dessen Randbereich eine ausreichende Rückhaltekraft bereitgestellt wird. So weist der Gassack 3 aufgrund seiner zylindrischen Form im Randbereich im wesentlichen den gleichen Querschnitt auf wie in den anderen Bereichen. Bei Eintreten der Knie 4 in den Gassack 3 erfolgt in dem entsprechenden Bereich eine Belastung des Gassacks 3, die zu einer weiteren Erhöhung des Gassackinnendrucks führt und so den Abbau der Bewegungsenergie des Fahrzeuginsassen ermöglicht.

## Patentansprüche

1. Gassack, insbesondere zum Schutz des Kniebereichs oder Kopfbereichs eines Fahrzeuginsassen, wobei der Gassack (1, 2, 3) im entfalteten Zustand in einem Hauptbereich (A) im wesentlichen zylindrisch ausgebildet ist und sich an den zylindrischen Hauptbereich (A) seitlich jeweils ein Seitenbereich (B) anschließt, durch den der Hauptbereich (A) seitlich verschlossen ist, und der Seitenbereich (B) durch Vernähen der seitlichen Enden von Gassackgewebelagen (106, 107; 111, 112, 113, 114; 121, 122, 123, 124, 125, 126; 131, 132, 133, 134) erzeugt wird, die durch Falten eines im wesentlichen zylindrischen Gewebeschlauches (A) entstanden sind, wobei der Gewebeschlauch (A) unter Ausbildung einzelner Segmente (106, 107; 111, 112, 113, 114; 121, 122, 123, 124, 125, 126; 131, 132, 133, 134) gefaltet wird und die dabei entstehenden Segmente aufeinandergelegt und durch eine Quernaht (108) an ihren seitlichen Enden vernäht werden,
**gekennzeichnet durch**
zusätzliche Gewebeabschnitte (141, 142, 143), die in oder zwischen die einzelnen Segmente (111, 112, 113, 114; 131, 132, 133, 134) des gefalteten Gassackes eingebracht sind.

2. Gassack nach Anspruch 1, **dadurch gekennzeichnet, daß** Gassackgewebelagen seitlich vernäht sind, die **dadurch** hergestellt werden, daß der Gewebeschlauch (A) kreuz- oder sternförmig gefaltet wird und dabei Segmente (111, 112, 113, 114; 121, 122, 123, 124, 125, 126; 131, 132, 133, 134) entstehen.

3. Gassack nach Anspruch 2, **dadurch gekennzeichnet, daß** die Segmente (111, 112, 113, 114; 121, 122, 123, 124, 125, 126) in ihrem mittleren Bereich (115) einen Abstand zueinander aufweisen.

4. Gassack nach Anspruch 2, **dadurch gekennzeichnet, daß** die Segmente (131, 132, 133, 134) in ihrem mittleren Bereich (135) zumindest teilweise einander überlappen, wobei die Gewebebahnen der überlappenden Segmente in diesem Bereich (135) übereinander angeordnet sind.

5. Gassack nach mindestens einem der Ansprüche 1 bis 4, **dadurch gekennzeichnet, daß** die zusätzlichen Gewebeabschnitte (143a, 143b) Teil des Gassacks sind.

6. Gassack nach mindestens einem der Ansprüche 1 bis 4, **dadurch gekennzeichnet, daß** die zusätzlichen Gewebeabschnitte doppelt gelegte Stoffstreifen (141, 142) sind, die bevorzugt vor Anbringen der Quernaht (108) von der Seite in oder zwischen die Segmente (111, 112, 113, 114; 121, 122, 123, 124, 125, 126; 131, 132, 133, 134) eingeschoben sind.

7. Gassack nach mindestens einem der vorangehenden Ansprüche, **dadurch gekennzeichnet, daß** der Gassack in seinem Nahtbereich (108) eine im wesentlichen konstante Dicke aufweist.

8. Gassack nach mindestens einem der vorangehenden Ansprüche, **dadurch gekennzeichnet, daß** der Seitenbereich (B) eine geringe Längsausdehnung aufweist, so daß sich der Gassack (1, 2, 3) bis kurz vor seine seitlichen Enden zylindrisch erstreckt.

9. Gassack nach mindestens einem der Ansprüche 1 bis 8, **dadurch gekennzeichnet, daß** der Gassack mindestens im zylindrischen Hauptbereich aus einer einteiligen Gewebebahn (100) besteht, die eine Längsnaht (105) aufweist.

10. Gassack nach mindestens einem der Ansprüche 1 bis 8, **dadurch gekennzeichnet, daß** der Gassack mindestens im zylindrischen Hauptbereich aus einem zugeschnittenen Gewebeschlauch besteht.

11. Gassack nach mindestens einem der vorangehenden Ansprüche, **dadurch gekennzeichnet, daß** dem Gassack ein Gasgenerator zum Aufblasen des Gassacks zugeordnet ist.

12. Gassack nach mindestens einem der vorangegengenen Ansprüche, **dadurch gekennzeichnet, daß** die zusätzlichen Gewebeabschnitte (141, 142, 143) insbesondere im seitlichen Nahtbereich des Gassackes eingebracht sind.

13. Verfahren zur Herstellung eines Gassacks nach Anspruch 1, mit folgenden Schritten:
a) Zurverfügungstellen eines im wesentlichen zylindrischen Gewebeschlauches (A),
b) Ausbreiten des Gewebeschlauches (A),
c) Zusammenlegen des Gewebeschlauches (A) unter Ausbildung einzelner Segmente (106, 107; 111, 112, 113, 114; 121, 122, 123, 124, 125, 126; 131, 132, 133, 134) und
d) Vernähen der Gewebelagen der übereinanderliegenden Segmente (106, 107; 111, 112, 113, 114; 121, 122, 123, 124, 125, 126; 131, 132, 133, 134) an ihren seitlichen Enden jeweils mit einer Quernaht (108)
**dadurch gekennzeichnet,**
**daß** in oder zwischen die Gewebelagen der einzelnen Segmente (131, 132, 133, 134) zusätzliche Gewebeabschnitte (141, 142) eingebracht werden, die zumindest teilweise eine einheitliche Dicke des gefalteten Gassacks bereitstellen.

14. Verfahren nach Anspruch 13, **dadurch gekennzeichnet, daß** nach dem Zurverfügungstellen eines im wesentlichen zylindrischen Gewebeschlauches (A) dieser zunächst kreuz- oder sternförmig gefaltet, die dabei entstehenden schlaufenartigen Segmente (111, 112, 113, 114; 121, 122, 123, 124, 125, 126; 131, 132, 133, 134) aufeinandergelegt und anschließend die durch die schlaufenartigen Segmente (111, 112, 113, 114; 121, 122, 123, 124, 125, 126; 131, 132, 133, 134) gebildeten Gewebelagen an ihren seitlichen Enden miteinander vernäht werden.

15. Verfahren nach Anspruch 14, **dadurch gekennzeichnet, daß** die schlaufenartigen Segmente 111, 112, 113, 114; 121, 122, 123, 124, 125, 126) derart gefaltet werden, daß sie in ihrem mittleren Bereich (115) zueinander beabstandet sind.

16. Verfahren nach Anspruch 14, **dadurch gekennzeichnet, daß** die schlaufenartigen Segmente (131, 132, 133, 134) derart gefaltet werden, daß sie sich in ihrem mittleren Bereich (135) zumindest teilweise überlappen, wobei die Gewebelagen der sich überlappenden Segmente in diesem Bereich (135) aufeinander liegen.

17. Verfahren nach mindestens einem der Ansprüche 13 bis 16, **dadurch gekennzeichnet, daß** die zusätzlichen Gewebeabschnitte in Bereiche des gefalteten Gewebeschlauches eingebracht werden, in denen eine nur verringerte Anzahl von übereinander angeordneten Gewebelagen der einzelnen Segmente (131, 132, 133, 134) vorhanden sind.

18. Verfahren nach mindestens einem der Ansprüche 13 bis 17, **dadurch gekennzeichnet, daß** die zusätzlichen Gewebeabschnitte im Bereich der Quernaht (108) der an ihren seitlichen Enden jeweils miteinander vernähten Gewebelagen eingebracht werden.

19. Verfahren nach mindestens einem der Ansprüche 12 bis 18, **dadurch gekennzeichnet, daß** zum Zurverfügungstellen eines im wesentlichen zylindrischen Gewebeschlauchs folgende Schritte ausgeführt werden:
a) Falten einer im wesentlichen rechteckigen Gewebebahn (100) auf die halbe Breite, wobei die Längskanten (101) der Gewebebahn (101) aufeinander zu liegen kommen,
b) Vernähen der aufeinanderliegenden Längskanten (101) zu einer Längsnaht (105).

## Claims

1. Airbag, in particular for protecting the knee region or head region of a vehicle occupant, in the deployed state the airbag (1, 2, 3) being designed essentially cylindrically in a main region (A), and the cylindrical main region (A) having adjoining it laterally in each case a lateral region (B) by means of which the main region (A) is closed laterally, and the lateral region (B) being produced by the stitching of the lateral ends of airbag fabric plies (106, 107; 111, 112, 113, 114; 121, 122, 123, 124, 125, 126; 131, 132, 133, 134) which are obtained by the folding of an essentially cylindrical fabric tube (A), the fabric tube (A) being folded so as to form individual segments (106, 107; 111, 112, 113, 114; 121, 122, 123, 124, 125, 126; 131, 132, 133, 134), and the segments obtained in this case being laid one onto the other and being stitched at their lateral ends by means of a transverse seam (108), **characterized by** additional fabric portions (141, 142, 143) which are introduced into or between the individual segments (111, 112, 113, 114; 131, 132, 133, 134) of the folded airbag.

2. Airbag according to Claim 1, **characterized in that** airbag fabric plies are stitched laterally, which are produced **in that** the fabric tube (A) is folded, in particular in the form of a cross or star, so as to form segments (111, 112, 113, 114; 121, 122, 123, 124, 125, 126; 131, 132, 133, 134).

3. Airbag according to Claim 2, **characterized in that** the segments (111, 112, 113, 114; 121, 122, 123, 124, 125, 126) have a clearance relative to one another in their middle region (115).

4. Airbag according to Claim 2, **characterized in that** the segments (131, 132, 133, 134) overlap one another at least partially in their middle region (135), the fabric sheets of the overlapping segments being arranged one above the other in this region (135).

5. Airbag according to at least one of Claims 1 to 4, **characterized in that** the additional fabric portions (143a, 143b) are part of the airbag.

6. Airbag according to at least one of Claims 1 to 4, **characterized in that** the additional fabric portions are double-folded cloth strips (141, 142) which are pushed from the side into or between the segments (111, 112, 113, 114; 121, 122, 123, 124, 125, 126; 131, 132, 133, 134), preferably before the transverse seam (108) is attached.

7. Airbag according to at least one of the preceding claims, **characterized in that** the airbag has an essentially constant thickness in its seam region (108).

8. Airbag according to at least one of the preceding claims, **characterized in that** the lateral region (B) has a small longitudinal extent, so that the airbag (1, 2, 3) extends cylindrically to a point just short of its lateral ends.

9. Airbag according to at least one of Claims 1 to 8, **characterized in that** the airbag consists, at least in the cylindrical main region, of a one-part fabric sheet (100) which has a longitudinal seam (105).

10. Airbag according to at least one of Claims 1 to 8, **characterized in that** the airbag consists, at least in the cylindrical main region, of a cut fabric tube.

11. Airbag according to at least one of the preceding claims, **characterized in that** the airbag is assigned a gas generator for inflating the airbag.

12. Airbag according to at least one of the preceding claims, **characterized in that** the additional fabric portions (141, 142, 143) are introduced in particular in the lateral seam region of the airbag.

13. Method for producing an airbag according to Claim 1, comprising the following steps:
a) provision of an essentially cylindrical fabric tube (A),
b) spreading out of the fabric tube (A),
c) folding together of the fabric tube (A) to form individual segments (106, 107; 111, 112, 113, 114; 121, 122, 123, 124, 125, 126; 131, 132, 133, 134), and
d) stitching of the fabric plies of the segments lying one above the other (106, 107; 111, 112, 113, 114; 121, 122, 123, 124, 125, 126; 131, 132, 133, 134) at their lateral ends in each case by means of a transverse seam (108), **characterized in that**
additional fabric portions (141, 142) are introduced into or between the fabric plies of the individual segments (131, 132, 133, 134) and provide at least partially a uniform thickness of the folded airbag.

14. Method according to Claim 13, **characterized in that**, after the provision of an essentially cylindrical fabric tube (A), the latter is first folded in the form of a cross or star, the loop-like segments (111, 112, 113, 114; 121, 122, 123, 124, 125, 126; 131, 132, 133, 134) obtained at the same time are laid one onto the other, and, subsequently, the fabric plies formed by the loop-like segments (111, 112, 113, 114; 121, 122, 123, 124, 125, 126; 131, 132, 133, 134) are stitched to one another at their lateral ends.

15. Method according to Claim 14, **characterized in that** the loop-like segments (111, 112, 113, 114; 121, 122, 123, 124, 125, 126) are folded in such a way that they have a clearance relative to one another in their middle region (115).

16. Method according to Claim 14, **characterized in that** the loop-like segments (131, 132, 133, 134) are folded in such a way that they overlap one another at least partially in their middle region (135), the fabric plies of the mutually overlapping segments lying one on the other in this region (135).

17. Method according to at least one of Claims 13 to 16, **characterized in that** the additional fabric portions are introduced into regions of the folded fabric tube in which there is only a reduced number of fabric plies, arranged one above the other, of the individual segments (131, 132, 133, 134).

18. Method according to at least one of Claims 13 to 17, **characterized in that** the additional fabric portions are introduced in the region of the transverse seam (108) of the fabric plies stitched to one another in each case at their lateral ends.

19. Method according to at least one of Claims 12 to 18, **characterized in that**, for the provision of an essentially cylindrical fabric tube, the following steps are carried out:
a) folding of an essentially rectangular fabric sheet (100) to half the width, the longitudinal edges (101) of the fabric sheet (101) coming to lie one on the other,
b) stitching of the longitudinal edges (101) lying one on the other to form a longitudinal seam (105).

## Revendications

1. Coussin à gaz, en particulier pour la protection de la région des genoux ou de la région de la tête d'un passager de véhicule, dans lequel le coussin à gaz (1, 2, 3) est réalisé sensiblement cylindrique dans une région principale (A), à l'état déployé, et à la région principale (A) cylindrique se raccorde une région latérale (B) respective au moyen de laquelle la région principale (A) est fermée latéralement, et la région latérale (B) est produite en cousant les extrémités latérales de couches de tissu de coussin à gaz (106, 107 ; 111, 112, 113, 114 ; 121, 122, 123, 124, 125, 126 ; 131, 132, 133, 134) qui sont formées par pliage d'un tuyau de tissu (A) sensiblement cylindrique, le tuyau de tissu (A) étant plié en réalisant des segments individuels (106, 107 ; 111, 112, 113, 114 ; 121, 122, 123, 124, 125, 126 ; 131, 132, 133, 134), et les segments qui sont formés étant posés les uns sur les autres et cousus à leurs extrémités latérales par une couture transversale (108),
**caractérisé par** des tronçons de tissu additionnels (141, 142, 143) qui sont introduits dans ou entre les segments individuels (111, 112, 113, 114 ; 131, 132, 133, 134) du coussin à gaz plié.

2. Coussin gonflable selon la revendication 1, **caractérisé en ce que** les couches de tissu de coussin à gaz, qui sont réalisées par le fait que le tuyau de tissu (A) est plié en croix ou en étoile, sont cousues latéralement et forment ainsi des segments (111, 112, 113, 114 ; 121, 122, 123, 124, 125, 126 ; 131, 132, 133, 134).

3. Coussin à gaz selon la revendication 2, **caractérisé en ce que** les segments (111, 112, 113, 114 ; 121, 122, 123, 124, 125, 126) présentent une distance mutuelle dans leur région médiane (115).

4. Coussin à gaz selon la revendication 2, **caractérisé en ce que** les segments (131, 132, 133, 134) se chevauchent au moins partiellement dans leur région médiane (135), les lés de tissu des segments qui se chevauchent étant agencés les uns au-dessus des autres dans cette région (135).

5. Coussin à gaz selon au moins l'une des revendications 1 à 4, **caractérisé en ce que** les tronçons de tissu additionnels (143a, 143b) font partie du coussin à gaz.

6. Coussin à gaz selon au moins l'une des revendications 1 à 4, **caractérisé en ce que** les tronçons de tissu additionnels sont des bandes de tissu (141, 142) posées en double qui sont insérées depuis le côté dans ou entre les segments (111, 112, 113, 114 ; 121, 122, 123, 124, 125, 126 ; 131, 132, 133, 134) avant d'appliquer la couture transversale (108).

7. Coussin à gaz selon au moins l'une des revendications précédentes, **caractérisé en ce que** le coussin à gaz présente une épaisseur sensiblement constante dans sa région de couture (108).

8. Coussin à gaz selon au moins l'une des revendications précédentes, **caractérisé en ce que** la région latérale (B) présente une extension longitudinale faible, de sorte que le coussin à gaz (1, 2, 3) s'étend sous forme cylindrique jusqu'à brève distance de ses extrémités latérales.

9. Coussin à gaz selon au moins l'une des revendications 1 à 8, **caractérisé en ce qu'**au moins dans la région principale cylindrique, le coussin à gaz est constitué par un lé de tissu (100) d'une seule pièce, qui présente une couture longitudinale (105).

10. Coussin à gaz selon au moins l'une des revendications 1 à 8, **caractérisé en ce qu'**au moins dans la région principale cylindrique, le coussin à gaz est constitué par un tuyau de tissu coupé à dimension.

11. Coussin à gaz selon au moins l'une des revendications précédentes, **caractérisé en ce qu'**au coussin à gaz est associé un générateur de gaz pour gonfler le coussin à gaz.

12. Coussin à gaz selon au moins l'une des revendications précédentes, **caractérisé en ce que** les tronçons de tissu additionnels (141, 142, 143) sont introduits en particulier dans la région de couture latérale du coussin à gaz.

13. Procédé de fabrication d'un coussin à gaz selon la revendication 1, comportant les étapes suivantes :
a) mise à disposition d'un tuyau de tissu (A) sensiblement cylindrique,
b) déploiement du tuyau de tissu (A),
c) pliage du tuyau de tissu (A) en formant des segments individuels (106, 107 ; 111, 112, 113, 114 ; 121, 122, 123, 124, 125, 126 ; 131, 132, 133, 134) et
d) couture des couches de tissu des segments (106, 107 ; 111, 112, 113, 114 ; 121, 122, 123, 124, 125, 126 ; 131, 132, 133, 134) situés les uns au-dessus des autres, à leurs extrémités latérales, par une couture transversale (108) respective,
**caractérisé en ce que**
dans ou entre les couches de tissu des segments individuels (131, 132, 133, 134) sont introduit des tronçons de tissu additionnels (141, 142) qui confèrent au coussin à gaz plié au moins partiellement une épaisseur uniforme.

14. Procédé selon la revendication 13, **caractérisé en ce qu'**après la mise à disposition d'un tuyau de tissu (A) sensiblement cylindrique, celui-ci est plié tout d'abord en forme croix ou en forme d'étoile, les segments (111, 112, 113, 114 ; 121, 122, 123, 124, 125, 126 ; 131, 132, 133, 134) alors formés à la manière de boucles sont posés les uns sur les autres et ensuite, les couches de tissu formées par les segments en forme de boucles (111, 112, 113, 114 ; 121, 122, 123, 124, 125, 126 ; 131, 132, 133, 134) sont cousues les unes aux autres à leurs extrémités latérales.

15. Procédé selon la revendication 14, **caractérisé en ce que** les segments (111, 112, 113, 114 ; 121, 122, 123, 124, 125, 126 ; 131, 132, 133, 134) en forme de boucles sont pliés de telle sorte qu'ils sont espacés les uns des autres dans leur région médiane (115).

16. Procédé selon la revendication 14, **caractérisé en ce que** les segments en forme de boucles (131, 132, 133, 134) sont pliés de telle manière qu'ils se chevauchent au moins partiellement dans leur région médiane (135), les couches de tissu des segments qui se chevauchent étant agencées les unes au-dessus des autres dans cette région (135).

17. Procédé selon au moins l'une des revendications 13 à 16, **caractérisé en ce que** les tronçons de tissu additionnels sont introduits dans des régions du tuyau de tissu plié dans lesquelles il n'y a qu'un nombre réduit de couches de tissu agencées les unes au-dessus des autres, des segments individuels (131, 132, 133, 134).

18. Procédé selon au moins l'une des revendications 13 à 17, **caractérisé en ce que** les tronçons de tissu additionnels sont introduits dans la région de la couture transversale (108) des couches de tissu cousues respectivement les unes aux autres à leurs extrémités latérales.

19. Procédé selon au moins l'une des revendications 12 à 18, **caractérisé en ce que** pour mettre à disposition un tuyau de tissu sensiblement cylindrique, on exécute les étapes suivantes :
a) pliage d'un lé de tissu (100) sensiblement rectangulaire à une demi-largeur, les arêtes longitudinales (101) du lé de tissu (100) venant reposer l'une sur l'autre,
b) couture des arêtes longitudinales (101) posées l'une sur l'autre pour former une couture longitudinale (105).
